# EUROPEAN PATENT SPECIFICATION

(11) **EP 2 550 850 B1**
(45) Date of publication and mention of the grant of the patent: **18.05.2016**
(21) Application number: 11759278.2
(22) Date of filing: 16.03.2011
(51) Int. Cl.: A01C 7/04

(54) **GRANULAR OBJECT DISTRIBUTION DEVICE**
VORRICHTUNG ZUR VERTEILUNG GRANULARER OBJEKTE
DISPOSITIF DE DISTRIBUTION D'OBJETS GRANULEUX

(30) Priority: 23.03.2010 JP 2010065913
(43) Date of publication of application: 30.01.2013
(73) Proprietor: National Research and Development Agency National Agriculture and Food Research Organization, Tsukuba-shi Ibaraki 3058517 (JP)
(72) Inventor: TACHIBANA, Yasuhiro, Saitama-shi Saitama 331-8537 (JP); SHITO, Hirokatsu, Saitama-shi Saitama 331-8537 (JP); KAWAIDE, Tetsuo, Saitama-shi Saitama 331-8537 (JP)
(74) Representative: Samson & Partner Patentanwälte mbB
(86) International application number: PCT/JP2011/056206
(87) International publication number: WO 2011/118472

(56) References cited:
- EP-A1- 0 140 236
- DE-A1- 1 457 869
- FR-A- 1 150 291
- GB-A- 428 709
- JP-A- 2 117 301
- JP-A- 10 178 823
- JP-A- 61 108 304
- JP-U- 62 060 110
- JP-U- 63 098 025
- US-A- 1 566 187
- US-A- 2 297 642
- US-A- 4 282 985

## Description

### [Technical Field]

The present invention relates to a granular substance distribution device capable of, at a high speed, distributing granular substances such as, for example, seeds, fertilizer, and tablets one by one and to each certain number of the granular substances and discharging it/them.

### [Background Art]

As a distribution device used in a seed sowing machine for sowing a predetermined number of, for example, seeds in each predetermined position, a vacuum type and a pressure application type using air by a fan and a blower, a roll type and an inclined-plate type distributing seeds by a grooved roll and rotation of a plate, and so on are included.

Conventionally, when, at a high speed, each one of relatively large seeds such as, for example, maize is picked up to be sown, a vacuum type or a pressure application type for single grain sowing is used, and when a plurality of relatively small seeds such as rice and wheat is sown, a roll type, an inclined-plate type, or the like that stores plurals grains in a certain volume is used.

The conventional vacuum type or pressure application type can sow seeds one by one at a high speed, but cannot be adapted to sowing in hill in which plural seeds are sown at a time.

On the other hand, the roll type or inclined-plate type can also distribute seeds one by one and to groups each composed of plural seeds and can be adapted to various seeds, but when the speed is accelerated, a vacant hill is likely to occur. For that reason, when holes each holding a seed/seeds therein are increased, seeds more than one or a predetermined number of seeds are sometimes held and accuracy deteriorates. Thus, it is difficult to achieve a high-speed property and accuracy. EP 0 140 236 A1 shows a single seed sowing device of the inclined-plate type. A rotating mechanism drives a drive shaft to which a scoop wheel and a chamber wheel are attached. The wheels are separated by a fixed metal mask. A hopper supplies granular substances to the scoop wheel. A housing encloses the wheels as well as the metal mask. A travel direction of the sowing device is perpendicular to the drive shaft.

Further, in Patent Document 1, for example, there has been disclosed a belt-type seed sowing device that distributes seeds in a manner to face two transfer belts having seed holding holes to each other.

### [Prior Art Document]

### [Patent Document]

[Patent Document 1] Japanese Laid-open Patent Publication No. 2005-333895

### [Disclosure of the Invention]

### [Problems to Be Solved by the Invention]

However, the above-described seed sowing device in Patent Document 1 has a seed sowing speed of about 0.6 m/s or less and is not suitable for high-speed work because when being operated at a high speed, the belts are likely to be deflected.

Current seed sowing machines have problems that a foreign-made one is large and heavy to thus be inferior to its workability and further is relatively expensive, and a domestic-made one has difficulty in achieving accuracy and speed of seed sowing. Further, there are a lot of types of feed crops such as maize, soybeans, sorghum, rice, and wheat, and plural seed sowing machines are required to be prepared according to sizes and shapes of seeds of the respective crops and a seed sowing condition (single grain sowing or sowing in hill), which causes an increase in management expenses.

Due to such a circumstance, in light of the development of a high-performance seed sowing machine that has high adaptability to seeds having various sizes and shapes and enables high-speed and highly accurate seed sowing work, a high-speed distribution device of seeds that is the heart of the high-performance seed sowing machine is needed.

An object of the present invention is to provide a granular substance distribution device that is capable of being manufactured at low cost, is adapted to granular substances having various sizes and shapes, and is capable of achieving high-speed and highly accurate distribution of both a single granular substance at a time and plural granular substances at a time.

### [Means for Solving the Problems]

In order to solve the above-described problems, the present invention provides a granular substance distribution device with the features of claim 1 including: a rotation mechanism rotating a drive shaft; a supply-side frame body; a distribution plate provided with holders each holding a granular substance or a predetermined amount of granular substances supplied to the inside of the supply-side frame body therein in an outer circumferential portion thereof; a discharge plate provided with recessed portions each holding the granular substance or granular substances therein in an outer circumferential portion thereof in a manner to correspond to positions of the holders; a delivery plate disposed between the distribution plate and the discharge plate and having a delivery hole through which the granular substances are delivered from the distribution plate to the discharge plate formed in an upper portion thereof; and a discharge-side frame body covering the outer circumference of the discharge plate and provided with a discharge port through which the granular substance or granular substances held in each of the recessed portions is or are discharged in a lower end portion thereof, in which the supply-side frame body, the delivery plate, and the discharge-side frame body are fixed, and the distribution plate and the discharge plate both rotate in the same direction and at the same speed about the drive shaft.

The granular substance distribution device discharges the granular substance or granular substances while traveling in a direction perpendicular to the drive shaft in the plane direction. The granular substance distribution device further discharges the granular substance or granular substances while traveling to a rotational direction rear side at a lower end of the discharge plate.

In the above-described granular substance distribution device, the shape of each of the holders is preferably a triangular shape opening to the outer circumference. Further, in the distribution plate, the thickness, of each of the holders, on a rotational direction front side is preferably formed thinner than that, of each of the holders, on a rotational direction rear side, and on the rotational direction rear side of each of the holders in the distribution plate, a projection projecting in the thickness direction of the distribution plate may also be formed.

A hopper in which the granular substances are temporarily stored and through which the granular substances are supplied to the supply-side frame body may also be provided. At the position of the delivery hole, a scraper resiliently coming into contact with the outer circumference of the distribution plate is preferably provided, and the scraper is more preferable to be formed in a manner that a tip portion of a plate material having a width is bent, have a bent portion thereof come into contact with a corner portion, on the outer circumference of the distribution plate, opposite to the position of the discharge plate, and have resilience toward the side of the discharge plate.

The drive shaft is preferably tilted in the direction in which the discharge-side frame body is positioned lower than the distribution plate.

### [Effect of the Invention]

According to the present invention, it is possible to at a high speed, distribute a precise amount one by one and to groups each composed of plural grains and discharge it/them.

### [Brief Description of the Drawings]

[FIG. 1] FIG. 1 is an exploded perspective view showing an embodiment of a granular substance distribution device according to the present invention;
[FIG. 2] FIG. 2 is a partial perspective view showing a distribution plate in FIG. 1;
[FIG. 3] FIG. 3 is a partial perspective view showing a different example of the distribution plate;
[FIG. 4(a) to FIG. 4(c)] FIG. 4(a) to FIG. 4(c) are partial front views showing distribution plates holding spherical seeds therein, in which FIG. 4(a) is the distribution plate of the present invention, FIG. 4(b) is the conventional plate-type plate, and FIG. 4(c) is the plate having arc-shaped holders;
[FIG. 5(a) to FIG. 5(c)] FIG. 5(a) to FIG. 5(c) are partial front views showing the distribution plates holding flat seeds therein, in which FIG. 5(a) is the distribution plate of the present invention, FIG. 5(b) is the conventional plate-type plate, and FIG. 5(c) is the plate having arc-shaped holders;
[FIG. 6(a) to FIG. 6(f)] FIG. 6(a) to FIG. 6(f) are front views showing variations of the distribution plate used in the present invention;
[FIG. 7] FIG. 7 is a front view showing a placement state of a scraper;
[FIG. 8] FIG. 8 is a cross-sectional view showing how the scraper comes into contact with the distribution plate;
[FIG. 9] FIG. 9 is a front view of a discharge plate in FIG. 1; and
[FIG. 10(a) and FIG. 10(b)] FIG. 10(a) and FIG. 10(b) are explanatory views of traveling directions of the distribution device, in which FIG. 10(a) shows the traveling direction of the present invention and FIG. 10(b) shows the conventional traveling direction.

### [Mode for Carrying out the Invention]

Hereinafter, an embodiment of the present invention will be explained with reference to the drawings. Incidentally, in the present description and drawings, components having practically the same functional structures are denoted by the same reference numerals and symbols to thereby omit repeated explanation.

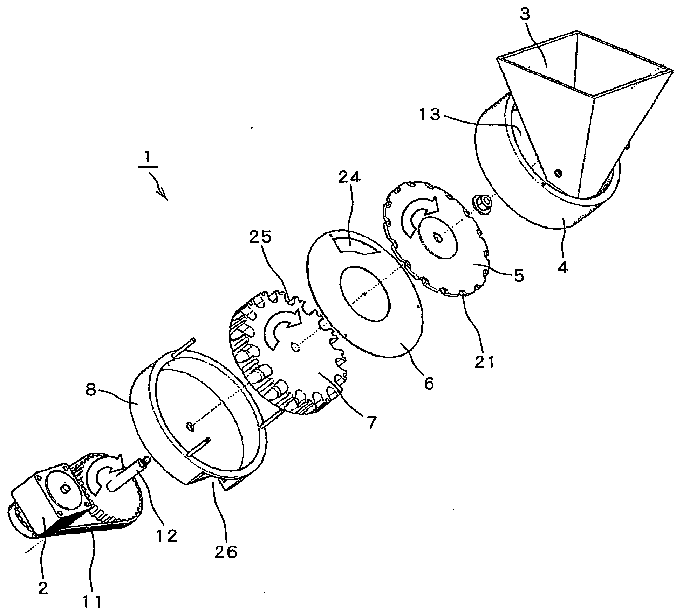

FIG. 1 is an exploded perspective view of a granular substance distribution device of the present invention. A distribution device 1 of the present invention is what is called an inclined-plate type, and is installed in a manner that the center axis is tilted from the vertical direction.

The distribution device 1 is provided with a motor 2 such as, for example, a stepping motor as a rotation mechanism, and has a hopper 3, a supply-side frame body 4, a distribution plate 5, a delivery plate 6, a discharge plate 7, and a discharge-side frame body 8. Motive power of the motor 2 is transmitted by, for example, a timing belt 11 to rotate a drive shaft 12, and the distribution plate 5 and the discharge plate 7 coaxially rotate at the same speed and in the same direction via the drive shaft 12. Incidentally, in the present description, the supply-side frame body 4 side is described as the obverse side and the discharge-side frame body 8 side is described as the reverse side.

The hopper 3 temporarily stores granular substances, which are, for example, seeds, therein and is provided with a supply port through which the granular substances are supplied to the inside of the supply-side frame body 4. Hereinafter, this embodiment will be explained based on the case of a seed distribution device to be mounted on a seed sowing machine.

The supply-side frame body 4 is a frame body having a cylindrical hollow portion 13, and on the reverse side thereof, the distribution plate 5 is disposed. The supply-side frame body 4 has an appropriate thickness in order that a seed accumulation should be formed in the hollow portion 13. Incidentally, the supply-side frame body 4 is not limited to the cylindrical one overall as illustrated in FIG. 1, and may also have the cylindrical hollow portion 13 in the center of a rectangular parallelepiped. Further, on the obverse side of the supply-side frame body 4, a cover may also be provided in order to prevent the seeds supplied from the hopper 3 from falling. The supply-side frame body 4 does not rotate and is fixed to the discharge-side frame body 8.

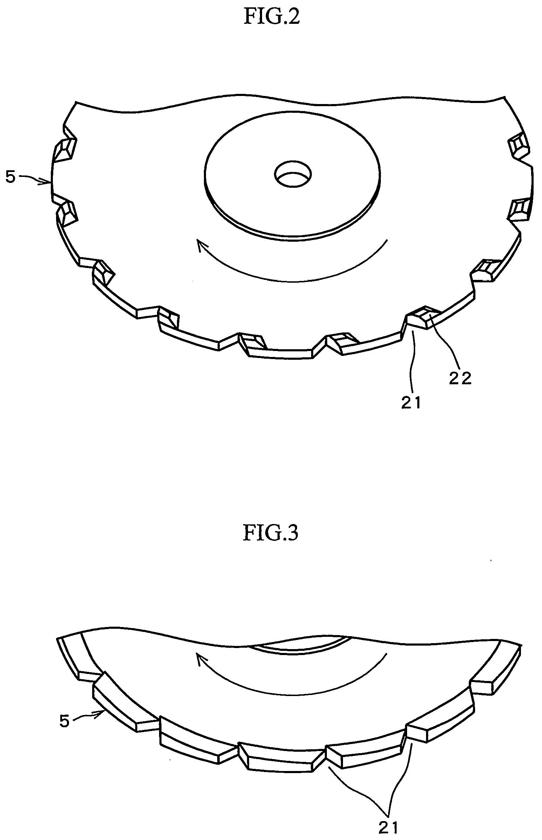

The distribution plate 5 has holders 21 each holding the seed/seeds to be sown at a time therein provided in an outer circumferential portion thereof in the circumferential direction. FIG. 2 shows an example of the distribution plate 5, and a planar shape of each of the holders 21 is formed into a triangular shape opening to the outer circumferential side of the distribution plate 5. Further, along the side on the rotational direction rear side of each of the holders 21, a projection 22 is provided in the thickness direction of the distribution plate 5. Alternatively, as shown in FIG. 3, the distribution plate 5 may also be formed in a manner to make, of each of the holders 21, the thickness on the rotational direction rear side thicker than that of the side on the rotational direction front side and to have a slope toward the rotational direction front side of each of the adjacent holders 21 in the thickness direction.

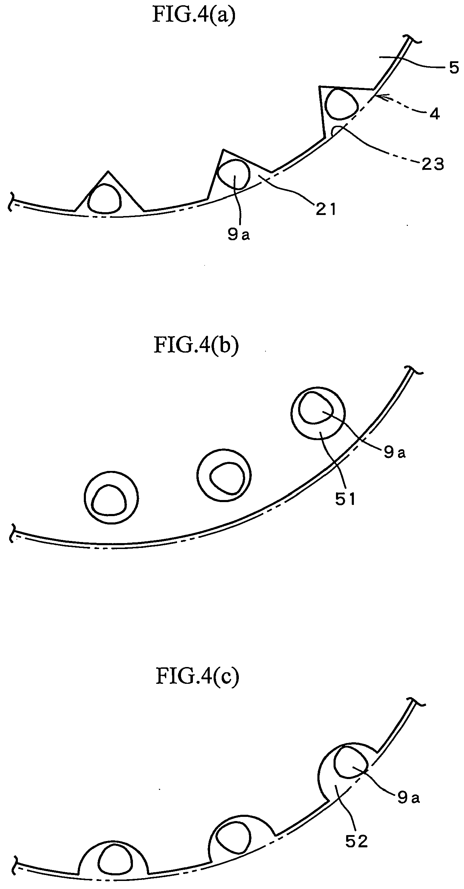

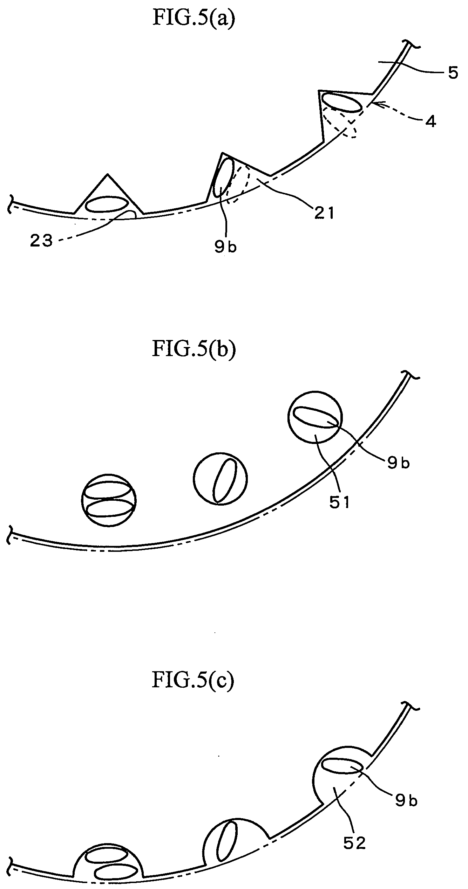

The shape of each of the holders 21 is formed into a triangular shape to thereby enable adaption to both spherical seeds and flat seeds. As shown in FIG. 4(a) to FIG. 4(c), spherical seeds 9a can be held securely separately one by one not only in the triangular holders 21 shown in FIG. 4(a) but also in circular holders 51 in a conventional plate-type plate shown in FIG. 4(b) and arc-shaped holders 52 shown in FIG. 4(c). On the other hand, in the case of flat seeds, according to the triangular holders 21 of the present invention, as shown in FIG. 5(a), even though a seed 9b is held in any direction, one more seed cannot get into each of the triangular holders 21, and the seeds 9b can be held one by one precisely. However, in the case of the circular holders 51 shown in FIG. 5(b) and the arc-shaped holders 52 shown in FIG. 5(c), the two seeds 9b get into the single holder 51 and holder 52 depending on an angle at which the seed 9b is held or the like. Thus, in the case of the circular holders 51 and the arc-shaped holders 52, the plate for the spherical seeds 9a and the plate for the flat seeds 9b are required to be replaced. According to the present invention, the holders 21 are each formed into a triangular shape, and thereby adaptability to the shapes of seeds is improved and the distribution plate 5 can be used without being replaced in many cases.

Incidentally, as shown in FIG. 4(a) to FIG. 4(c) and FIG. 5(a) to FIG. 5(c), a gap small enough to prevent the seed from getting thereinto is provided between an internal face 23 of the hollow portion 13 of the supply-side frame body 4 and the outer circumference of the distribution plate 5 in order to prevent the supply-side frame body 4 from hindering the rotation of the distribution plate 5 and to prevent the seed from getting into the reverse side from places other than the holders 21. Further, the gap between the internal face 23 of the supply-side frame body 4 and the outer circumference of the distribution plate 5 may also be increased only at the position of a delivery hole 24 so that the seed/seeds can securely fall to the discharge plate 7 side at the position of the delivery hole 24 in the later-described delivery plate 6.

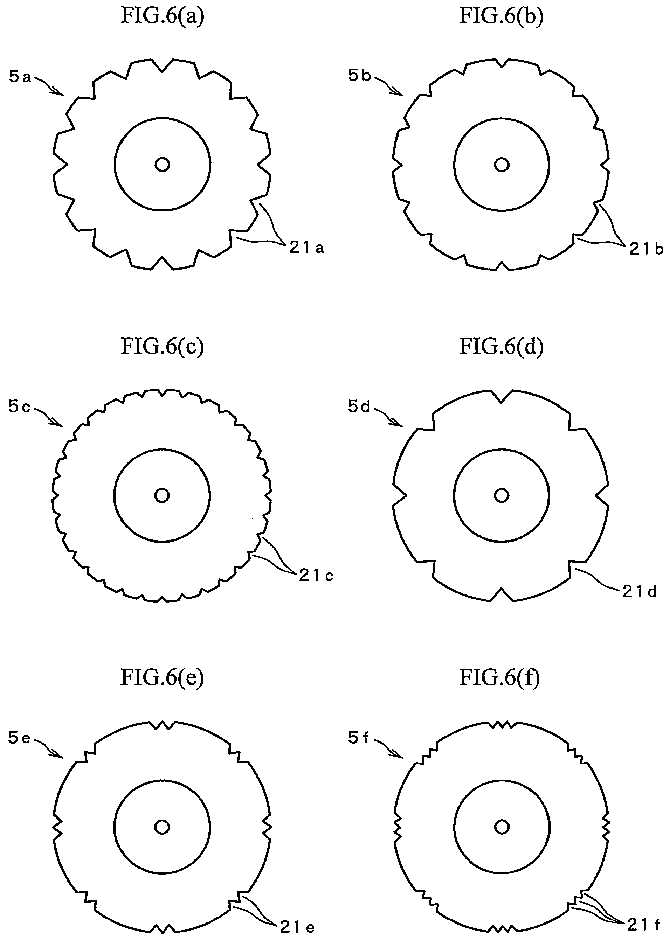

In the present invention, distribution plates 5 whose size and number of holders 21 are different are preferably used according to the size and number of seeds to be distributed in order to improve distribution accuracy of granular substances (seeds). FIG. 6(a) to FIG. 6(f) show examples of the distribution plate. FIG. 6(a) and FIG. 6(b) are the distribution plates having 16 holders 21a and 16 holders 21b whose sizes are different, and are used properly in the case when seed sowing methods are the same and seeds are different in size such as an example where a distribution plate 5a in FIG. 6(a) is for large seeds of maize, for example and a distribution plate 5b in FIG. 6(b) is for small seeds. Further, a distribution plate 5c in FIG. 6(c) has 32 small holders 21c and is used for small seeds such as, for example, sorghum, and a distribution plate 5d in FIG. 6(d) has 8 holders 21d with large intervals therebetween and is used for sowing in hill in which plural seeds of, for example, feed rice or wheat are fed to each place at a time. The number of the holders 21 in each of the distribution plates 5 is preferably unified to multiples of 8 as shown in FIG. 6(a) to FIG. 6(f), for example in order to make positions of recessed portions 25 being seed holding portions of the later-described discharge plate 7 and positions of the holders 21 correspond to each other. FIG. 6(e) and FIG. 6(f) are examples of the distribution plate used in the case when plural seeds are sown in each place at a time. A distribution plate 5e in FIG. 6(e) has two consecutive holders 21e provided in the outer circumference of the distribution plate 5e at equal intervals and is used in the case when for example, two soybeans, two seeds of maize, or the like are sown in each place at a time. A distribution plate 5f in FIG. 6(f) has three consecutive holders 21f provided in the outer circumference of the distribution plate 5f at equal intervals and is used in the case when three of relatively small seeds such as, for example, sorghum are sown in each place at a time. Incidentally, in the present invention, the distribution plate 5 is not limited to the one in which the single holder 21 or the plural consecutive holders 21 is/are disposed in the outer circumference at equal intervals, and the holder 21 is only required to be disposed at appropriate intervals according to desired discharge positions of granular substances to be distributed.

As shown in FIG. 1, the delivery plate 6 is provided between the distribution plate 5 and the discharge plate 7. The delivery plate 6 does not rotate and is fixed to the discharge-side frame body 8. Further, its shape is not limited to the circular shape as illustrated in FIG. 1, and for example, a square shape is also accepted. In an upper portion of the delivery plate 6, namely in a position to be the upper side when the delivery plate 6 is assembled as the distribution device 1, the delivery hole 24 through which the seeds are delivered from the distribution plate 5 to the discharge plate 7 is formed.

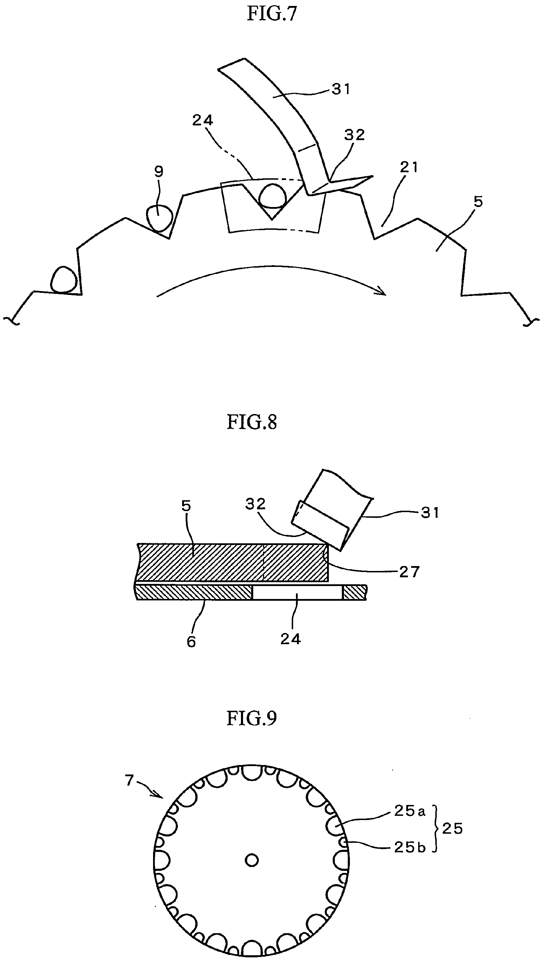

As shown in FIG. 7, at a position where the distribution plate 5 rotates and then the holders 21 do not finish passing through the delivery hole 24 yet, a scraper 31 is provided so as to come into contact with the outer circumference of the distribution plate 5. The scraper 31, in the case when a seed 9 is attached to the holder 21 and does not fall to the discharge plate 7 side, forcedly pushes the seed 9 out in the direction of the delivery hole 24. The scraper 31 is made of, for example, spring steel and is formed in a manner that a tip portion of a plate material having a width is bent, and has one end thereof attached to a cover (whose illustration is omitted) on the obverse side of the supply-side frame body 4, for example. Then, as shown in FIG. 8, a bent portion 32 comes into contact with a corner portion 27 on the obverse side of the outer circumference of the distribution plate 5, namely on the side opposite to the delivery plate 6 and the discharge plate 7, and is resiliently pressed toward the discharge plate 7 side. For this reason, the scraper 31 can be similarly used for any one of the distribution plates 5a to 5d shown in FIG. 6(a) to FIG. 6(d), for example and is not required to be replaced according to the distribution plate 5, and the attachment position and so on are not required to be adjusted. Further, the direction of resilience of the scraper 31 is tilted toward the discharge plate 7 side from the radial direction of the distribution plate 5, thereby making it possible to securely push the seed 9 out to the discharge plate 7.

In the outer circumference of the discharge plate 7, the recessed portions 25 each holding the seed/seeds delivered from the distribution plate 5 therein are provided. FIG. 9 shows an example of the discharge plate 7, and as for the recessed portions 25, a relatively large recessed portion 25a used for large seeds for single grain sowing, at the time of sowing in hill, and so on and a relatively small recessed portion 25b used in the case when seed sowing is performed at short intervals, and so on are alternately provided at equal intervals. The positions of the recessed portions 25 correspond to the holders 21 in the distribution plate 5, and each of the large recessed portions 25a is formed larger than each of the holders 21 in the distribution plate 5 for large seeds and for sowing in hill, and each of the small recessed portions 25b is formed larger than each of the holders 21c in the distribution plate 5c (see FIG. 6(c)) for small seeds. Thereby, the same discharge plate 7 can be used for a plurality of types of the distribution plates 5a to 5d as shown in FIG. 6(a) to FIG. 6(d). Alternatively, as long as each of the large recessed portions 25a is larger than the size obtained by adding the consecutive plural holders 21e shown in FIG. 6(e) and the consecutive plural holders 21f shown in FIG. 6(f), the same discharge plate 7 can be used also for the distribution plates 5e and 5f shown in FIG. 6(e) and FIG. 6(f). Incidentally, each of the recessed portions 25 is opened on the obverse side and is bottomed on the reverse side, and is preferably designed that the seed/seeds delivered from the obverse side does/do not fall through the reverse side to be held in the recessed portion 25.

The discharge plate 7 is placed inside the discharge-side frame body 8. The discharge-side frame body 8 covers the entire outer circumference of the discharge plate 7 and has a discharge port 26 provided in a lower end portion thereof. A gap small enough to prevent the seed from getting thereinto is provided between an internal face of the discharge-side frame body 8 and the outer circumference of the discharge plate 7 in order to prevent the discharge-side frame body 8 from hindering the rotation of the discharge plate 7 and to prevent the seed/seeds held in each of the recessed portions 25 from going out of the recessed portion 25 at positions other than the discharge port 26. Thereby, the seed/seeds held in each of the recessed portions 25 in the discharge plate 7 is/are conveyed downward by the rotation of the discharge plate 7 to be discharged through the discharge port 26.

In the distribution device 1 of the present invention, similarly to a conventional inclined-plate type seed distribution device, the center axis (the drive shaft 12) is tilted in the direction in which the discharge side of seeds (the discharge-side frame body 8) is placed at a position lower than the supply side (the supply-side frame body 4). As long as a tilted angle is about 38° to 58°, for example, from the vertical direction 0°, seed sowing can be performed accurately.

The operation in the case when the distribution device 1 explained above is mounted on a seed sowing machine will be explained.

Seeds temporality stored in the hopper 3 are supplied to the inside of the supply-side frame body 4, and from a seed accumulation formed in the supply-side frame body 4, the single seed or a predetermined number of the seeds necessary for sowing at a time is/are held in each of the holders 21 in the distribution plate 5. By the rotation of the distribution plate 5, the seed/seeds held in the holder 21 that reaches the position of the delivery hole 24 in the delivery plate 6 falls/fall through the delivery hole 24 to be held in the recessed portion 25 in the discharge plate 7. Each of the holders 21 is a triangular shape opening to the outer circumference side and the thickness on the rotational direction rear side of each of the holders 21 is thicker than that on the rotational direction front side thereof, thereby making it easier for the seed/seeds to get into each of the holders 21 at the time of the seed/seeds being held and to go out at the time of the seed/seeds being delivered.

The seed/seeds held in the recessed portion 25 is/are conveyed to the discharge port 26 by the rotation of the discharge plate 7 to be discharged through the discharge port 26 provided in the lower end portion, namely in the position near the ground.

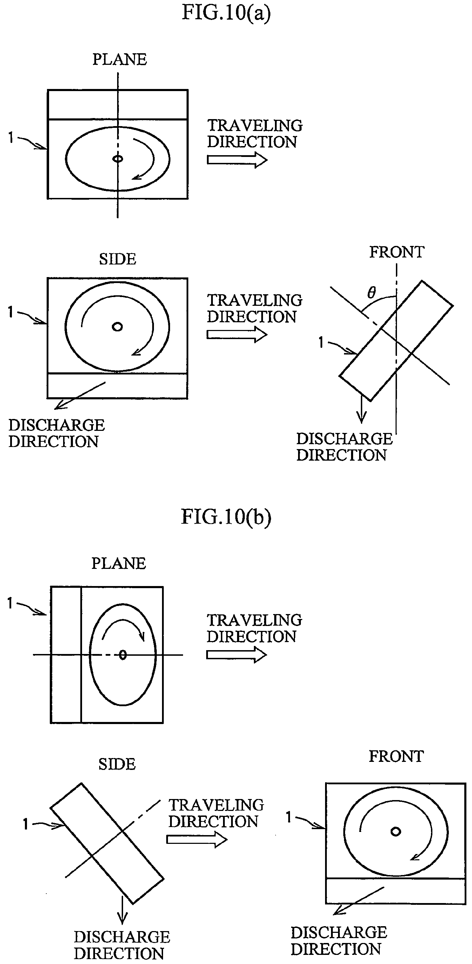

In the case of the distribution device 1 of the present invention being mounted on, for example, a seed sowing machine or the like, the distribution device 1 performs seed sowing work while being moved in a traveling direction shown in FIG. 10(a). That is, it is designed that the distribution device 1 travels in a direction perpendicular to the drive shaft in the plane direction when seen from above and to the rotational direction rear side at the lower end of the discharge plate 7 and the seed/seeds is/are discharged rearward with respect to the traveling direction of the distribution device 1. Thereby, the overall speed of the distribution device 1 and the speed at the time of the seed/seeds being discharged are counterbalanced with each other and the speed difference between the seed/seeds and the ground is decreased, and thus the seed/seeds can be discharged at a precise position. As for the traveling direction in this case, the case of a relative traveling direction of the distribution device 1 with respect to the discharge position is also included. That is, also in the case when, for example, the whole position of the distribution device 1 is fixed and the discharge position is moved by a conveyer or the like, the granular substance/substances is/are discharged rearward with respect to the relative traveling direction of the distribution device 1. In a conventional seed sowing machine, as shown in FIG. 10(b), the distribution device 1 is tilted rearward with respect to the traveling direction, and in the case when the discharge position is tentatively provided near the ground, the rotational direction of the plate is turned to be transverse with respect to the traveling direction, and thus a seed/seeds is/are discharged transversely. For that reason, when the rotating speed of the plate is increased, the discharge position sometimes greatly deviates in the transverse direction (to the front in the rotational direction) from a desired seed sowing position. According to the present invention, seed sowing can be precisely performed in a desired position without the discharge position deviating in the transverse direction.

As described above, according to the present invention, the distribution plate 5 that separates granular substances such as, for example, seeds one by one or to each predetermined number of the granular substances and the discharge plate 7 that conveys the separated granular substance/separated granular substances to the discharge port 26 through which the separated granular substance/separated granular substances is/are discharged are separated, and thereby high distribution accuracy and discharge accuracy can be achieved. Thus, in the case when the distribution device 1 is mounted on a seed sowing machine, speeding up is made possible in both single grain sowing of, for example, maize, sorghum, soybeans, and so on and sowing in hill of rice and so on.

By the discharge plate 7 and the distribution plate 5 being separated, the seed/seeds can be discharged in the vicinity of the ground without hitting against a member and the like, and thus bounces on the member and the ground can be made small and seed sowing accuracy is improved. In a conventional inclined-plate type seed sowing machine, when the discharge position of seeds is positioned lower than the center of the rotation of the plate, the discharge position of seeds interferes with the position of a seed accumulation, and thus seed sowing is difficult to be performed, but in the present invention, it is possible to convey a seed/seeds to the place lower than the position of a seed accumulation to discharge it/them.

Further, the present invention has a simple structure, so that when the present invention is used as a seed distribution device of a seed sowing machine, for example, it is expected that depreciation cost of the machine is suppressed and the present invention contributes to lowering the cost of the seed sowing work.

In the foregoing, the preferred embodiment of the present invention has been described, but the present invention is not limited to such an example. It should be understood that various changes and modifications are readily apparent to those skilled in the art within the scope of the claims.

### [Examples]

### <Example 1>

With regard to seeds having different varieties, sizes, and shapes, a performance test to examine an effect of a feeding speed of seeds on accuracy was performed by using the distribution device of the present invention. As for the feeding speed of maize, a work of sowing a single grain in each hill at the speed of 2 m/s at the maximum at the time of the distribution device being mounted on a seed sowing machine was supposed, and the test was performed at rotating speeds of 4 times/s, 8 times/s, and 12 times/s. As the varieties of maize, four types of KD777LR (thousand grain weight 397 g) and NS129SR (thousand grain weight 226 g) as spherical grains and KD772 super LF (thousand grain weight 326 g) and KD670SF (thousand grain weight 263 g) as flat grains in total were set.

As an index of accuracy, a percentage of one grain was set. Incidentally, a supposed speed of the above-described seed sowing work was set to be equal to that of a commercially supplied air pressure application type seed sowing machine for single grain sowing. Results of the test are shown in Table 1.

### [Table 1]

In Table 1, the percentage of one grain, the percentage of vacant hill, and the percentage of two grains each are an average value obtained after 100-time continuous feeding being performed five times, and falling points of the seed/seeds were photographed by a high-speed camera and then were reproduced on a monitor to be counted. As for the numbers of the distribution plate, N represents the number of holders formed in the outer circumference of the distribution plate, φ represents the diameter of an inscribed circle of each of the holders (mm), and t represents the thickness of a thickest portion of the distribution plate (mm).

With regard to the four types of maize, as shown in Table 1, in both the spherical grains and the flat grains, the percentage of one grain was about 98% or more at each of the feeding speeds of 4 to 12 times/s, which was highly accurate.

### <Example 2>

Similarly to Example 1, with regard to sorghum, a performance test to examine an effect of a feeding speed on accuracy was performed. As for the feeding speed, a work of sowing a single grain in each hill at the speed of 2 m/s at the maximum at the time of the distribution device being mounted on a seed sowing machine was supposed, and the test was performed at rotating speeds of 8 times/s, 16 times/s, and 24 times/s. As a variety of sorghum, Super Sugar (thousand grain weight 32 g) was set.

As an index of accuracy, similarly to the maize in Example 1, a percentage of one grain was set. Results of the test are shown in Table 2.

### [Table 2]

In Table 2, the percentage of one grain, the percentage of vacant hill, and the percentage of two grains each are an average value obtained after 200-time continuous feeding being performed three times, and similarly to Example 1, falling points of the seed/seeds were photographed by a high-speed camera and then were reproduced on a monitor to be counted. The numbers of the distribution plate are as described in Example 1.

With regard to the sorghum, as shown in Table 2, at each of the feeding speeds of 8 to 24 times/s, the percentage of one gain was about 99%, which was highly accurate.

### <Example 3>

Similarly to Example 1, with regard to feed rice and wheat that are sown in hill, a performance test to examine an effect of a feeding speed on accuracy was performed. As for the feeding speed, a work of sowing plural grains in each hill at 1.5 m/s was supposed, and rotating speeds of 4 times/s, 6 times/ s, and 8 times/s were set. As varieties of feed rice, Leaf Star (thousand grain weight 27 g) and Nishiaoba (thousand grain weight 37 g) were set, and as a variety of wheat, Norin 61 (thousand grain weight 39 g) was set.

A supposed speed of the above-described seed sowing work was set to be equal to that of a commercially supplied irrigation direct sowing machine for stripe sowing of paddy rice or to be equal to or more than it. As an index of accuracy, the average number of grains in one hill was set and 50-time continuous feeding was performed one time, and an average value of the number of grains in one hill, a standard deviation, and a variation coefficient were obtained. The grains in one hill, similarly to the above-described examples, were photographed by a high-speed camera and were reproduced on a monitor to be counted. Incidentally, as the distribution plate, N8-φ7-t7 was set. Results of the tests are shown in Table 3.

### [Table 3]

With regard to the feed rice and wheat, as shown in Table 3, even though the feeding speed is varied in a range of 4 to 8 times/s, there is no significant variation of the average number of fed grains, and the standard deviation is one grain or so and the variation coefficient of the number of grains fed at a time is 15% or less in any one of the crops in spite of the difference in the feeding speed, which fall within ranges where the values can be determined to be substantially constant.

### <Example 4>

There was performed a performance test to examine an effect of a tilted angle of the drive shaft rotating the distribution plate and the discharge plate on seed sowing accuracy. As seeds, spherical and large maize KD777LR in Example 1 was set. As the tilted angle of the drive shaft, five types of 38°, 43°, 48°, 53°, and 58° were set with the vertical direction set as 0°, and average values of a percentage of one grain, a percentage of vacant hill, and a percentage of two grains obtained after 100-time continuous feeding being performed five times were counted by a method similar to that in the above-described examples. The feeding speed was set to 8 times/s. Results of the test are shown in Table 4.

### [Table 4]

Even though the drive shaft is tilted ± 10 degrees or so from 48 degrees being a datum, the percentage of one grain is substantially 98% or more and the accuracy hardly deteriorates. Thus, according to the present invention, the distribution device can correspond to a wider installation angle than a conventional inclined-plate type distribution device.

### [Industrial Applicability]

The present invention can be utilized as a seed feeding device of a high-performance seed sowing machine, a no-tillage seed sowing machine, and so on that are expected to be developed on the premise of utilization of a contractor requiring high working efficiency mainly. Further, the present invention can be applied as a device that distributes roughly spherical-shaped or frat-shaped granular substances such as in addition to seeds, fertilizer, foods, medical agents, and so on one by one or to each predetermined number of the granular substances precisely at a high speed.

### [Explanation of Codes]

- 1: distribution device

- 2: motor
- 3: hopper
- 4: supply-side frame body
- 5: distribution plate
- 6: delivery plate
- 7: discharge plate
- 8: discharge-side frame body
- 9: seed
- 12: drive shaft
- 21: holder
- 24: delivery hole
- 25: recessed portion
- 26: discharge port
- 31: scraper
- 32: bent portion

**TABLE1**

| VARIERY SIZE · SHAPE | DISTRIBUTION PLATE | | FEEDING SPEED | | |
|---|---|---|---|---|---|
| | | | 4 TIMES/s | 8 TIMES/s | 12 TIMES/s |
| KD777LR LARGE · SPHERICAL GRAIN | N16-ϕ9-t8 | PERCENTAGE OF ONE GRAIN | 99.8% | 99.0% | 98.6% |
| | | PERCENTAGE OF VACANT HILL | 0 | 0.6 | 1.4 |
| | | PERCENTAGE OF TWO GRAINS | 0.2 | 0.4 | 0 |
| KD772 SUPER LF LARGE · FLAT GRAIN | | PERCENTAGE OF ONE GRAIN | 97.8 | 97.4 | 97.4 |
| | | PERCENTAGE OF VACANT HILL | 0.8 | 1.6 | 2.2 |
| | | PERCENTAGE OF TWO GRAINS | 1.4 | 1 | 0.4 |
| NS129SR SMALL · SPHERICAL GRAIN | N16-ϕ7-t7 | PERCENTAGE OF ONE GRAIN | 97.8 | 98.4 | 98.6 |
| | | PERCENTAGE OF VACANT HILL | 0.2 | 0.2 | 0 |
| | | PERCENTAGE OF TWO GRAINS | 2 | 1.4 | 1.4 |
| KD670SF SMALL · FLAT GRAIN | | PERCENTAGE OF ONE GRAIN | 99.4 | 97.8 | 99.2 |
| | | PERCENTAGE OF VACANT HILL | 0.4 | 2 | 0.4 |
| | | PERCENTAGE OF TWO GRAINS | 0.2 | 0.2 | 0.4 |

**TABLE2**

| VARIETY | DISTRIBUTION PLATE | | 8 TIMES/s | 16 TIMES/s | 24 TIMES/s |
|---|---|---|---|---|---|
| SUPER SUGAR | N32-ϕ3.5-t4 | PERCENTAGE OF ONE GRAIN | 98.8% | 99.3% | 98.9% |
| | | PERCENTAGE OF VACANT HILL | 0.7 | 0.5 | 0.8 |
| | | PERCENTAGE OF TWO GRAINS | 0.5 | 0.2 | 0.3 |

**TABLE3**

| CROP | FEED RICE | | | | | | WHEAT | | |
|---|---|---|---|---|---|---|---|---|---|
| VARIETY | LEAF STAR | | | NISHIAOBA | | | NORIN 61 | | |
| FEEDING SPEED (TIME/s) | 4 | 6 | 8 | 4 | 6 | 8 | 4 | 6 | 8 |
| AVERAGE NUMBER OF GRAINS IN ONE HILL (GRAIN) | 8 | 7.9 | 8.1 | 6.7 | 6.9 | 6.9 | 6.7 | 7 | 6.9 |
| STANDARD DEVIATION (GRAIN) | 1.2 | 1.1 | 1.1 | 0.8 | 0.9 | 1 | 0.9 | 0.9 | 0.7 |
| VARIETION COEFFICIENT (%) | 15 | 15 | 14 | 12 | 13 | 14 | 14 | 12 | 11 |

**TABLE4**

| CROP (VARIETY) | DISTRIBUTION PLATE | | TILTED ANGLE OF PLATE ROTATION AXIS (VERTICAL DIRECTION IS 0°) | | | | |
|---|---|---|---|---|---|---|---|
| | | | 38° | 43° | 48° | 53° | 58° |
| MAIZE (KD777LR) | N16-ϕ9-t8 | PERCENTAGE OF ONE GRAIN | 97.8% | 99.4% | 99.0% | 97.8% | 98.2% |
| | | PERCENTAGE OF VACANT HILL | 0.2 | 0.2 | 0.6 | 2.2 | 1.8 |
| | | PERCENTAGE OF TWO GRAINS | 2 | 0.4 | 0.4 | 0 | 0 |

## Claims

1. A granular substance distribution device (1), comprising:
a rotation mechanism (2) rotating a drive shaft (12);
a supply-side frame body (4);
a distribution plate (5) provided with holders (21) each holding a granular substance or a predetermined amount of granular substances supplied to the inside of said supply-side frame body (4) therein in an outer circumferential portion thereof;
a discharge plate (7) provided with recessed portions (25) each holding the granular substance or granular substances therein in an outer circumferential portion thereof in a manner to correspond to positions of the holders (21);
a delivery plate (6) disposed between said distribution plate (5) and said discharge plate (7) and having a delivery hole (24) through which the granular substances are delivered from said distribution plate (5) to said discharge plate (7) formed in an upper portion thereof; and
a discharge-side frame body (8) covering the outer circumference of said discharge plate (7) and provided with a discharge port (26) through which the granular substance or granular substances held in each of the recessed portions (25) is or are discharged in a lower end portion thereof, wherein
said supply-side frame body (4), said delivery plate (6), and said discharge-side frame body (8) are fixed, and
said distribution plate (5) and said discharge plate (7) both rotate in the same direction and at the same speed about the drive shaft (12), and wherein
the granular substance distribution device (1) discharges the granular substance or granular substances while traveling in a direction perpendicular to the drive shaft (12) in the plane direction, **characterized in that**
the granular substance distribution device (1) discharges the granular substance or granular substances while traveling to a rotational direction rear side at a lower end of said discharge plate (7).

2. The granular substance distribution device (1) according to claim 1, wherein
the shape of each of the holders (21) is a triangular shape opening to the outer circumference.

3. The granular substance distribution device (1) according to claim 1, wherein
in said distribution plate (5), the thickness, of each of the holders (21), on a rotational direction front side is formed thinner than that, of each of the holders (21), on a rotational direction rear side.

4. The granular substance distribution device (1) according to claim 3, wherein
on the rotational direction rear side of each of the holders (21) in said distribution plate (5), a projection projecting in the thickness direction of said distribution plate (5) is formed.

5. The granular substance distribution device (1) according to claim 1, wherein
a hopper (3) in which the granular substances are temporarily stored and through which the granular substances are supplied to said supply-side frame body (4) is provided.

6. The granular substance distribution device (1) according to claim 1, wherein
at the position of the delivery hole (24), a scraper (31) resiliently coming into contact with the outer circumference of said distribution plate (5) is provided.

7. The granular substance distribution device (1) according to claim 6, wherein
the scraper (31) is formed in a manner that a tip portion of a plate material having a width is bent, has a bent portion (32) thereof come into contact with a corner portion, on the outer circumference of said distribution plate (5), opposite to the position of said discharge plate (7), and has resilience toward the side of said discharge plate (7).

8. The granular substance distribution device (1) according to claim 1, wherein
the drive shaft (12) is tilted in the direction in which said discharge-side frame body (8) is positioned lower than said distribution plate (5).

9. The granular substance distribution device (1) according to claim 1, wherein
said discharge plate (7) has two types of recessed portions (25a, 25b) whose sizes are different provided therein alternately at equal intervals and positions of the recessed portions (25a, 25b) correspond to positions of the holders (21) in said distribution plate (5).

10. The granular substance distribution device (1) according to claim 9, wherein
the recessed portions (25a, 25b) are each opened to an outer circumferential side of said discharge plate (7) and to an upper face side facing said delivery plate (6), and are each bottomed on a bottom face side.

## Patentansprüche

1. Vorrichtung (1) zum Verteilen einer körnigen Substanz, umfassend:
einen Drehmechanismus (2), der eine Antriebswelle (12) dreht;
einen zuführungsseitigen Rahmenkörper (4);
eine Verteilplatte (5), die Halter (21) in einem Außenumfang aufweist, jeder Halter eine körnige Substanz oder eine vorbestimmte Menge körniger Substanzen haltend, die der Innenseite des zuführungsseitigen Rahmenkörpers (4) zugeführt wurde;
eine Austrittsplatte (7), die ausgesparte Bereiche (25) in einem Außenumfang umfasst, jeder ausgesparte Bereich die körnige Substanz oder die körnigen Substanzen dergestalt haltend, dass sie mit Positionen der Halter (21) übereinstimmen;
eine Übergabeplatte (6), die zwischen der Verteilplatte (5) und der Austrittsplatte (7) angeordnet ist und die in einem oberen Bereich ein Übergabeloch (24) aufweist, durch das die körnigen Substanzen von der Verteilplatte (5) zu der Austrittsplatte (7) übergeben werden; und
einen austrittsseitigen Rahmenkörper (8), der den Außenumfang der Austrittsplatte bedeckt (7) und in einem unteren Endbereich ein Austrittstor (26) aufweist, durch welches die körnige Substanz oder die körnigen Substanzen, die in jedem der ausgesparten Bereiche (25) gehalten ist oder sind, austreten, wobei
der zuführungsseitige Rahmenkörper (4), die Übergabeplatte (6), und der austrittsseitige Rahmenkörper (8) fest sind, und
die Verteilplatte (5) und die Austrittsplatte (7) sich beide in die gleiche Richtung und mit der gleichen Geschwindigkeit um die Antriebswelle (12) drehen, und wobei
die Vorrichtung (1) zum Verteilen einer körnigen Substanz die körnige Substanz oder die körnigen Substanzen ausgibt, während sie sich in eine Richtung senkrecht zu der Antriebswelle (12) in der Ebenenrichtung bewegt, **dadurch gekennzeichnet, dass**
die Vorrichtung (1) zum Verteilen einer körnigen Substanz, während sie sich bewegt, die körnige Substanz oder die körnigen Substanzen an einer in Drehrichtung betrachteten hinteren Seite an einem unteren Ende der Austrittsplatte (7) ausgibt.

2. Vorrichtung (1) zum Verteilen einer körnigen Substanz nach Anspruch 1, wobei
die Form eines jeden der Halter (21) eine dreieckige Form ist, die zum Außenumfang hin geöffnet ist.

3. Vorrichtung (1) zum Verteilen einer körnigen Substanz nach Anspruch 1, wobei
in der Verteilplatte (5) die Dicke eines jeden der Halter (21) auf einer in Drehrichtung betrachteten vorderen Seite dünner geformt ist als die Dicke eines jeden der Halter (21) auf einer in Drehrichtung betrachteten hinteren Seite.

4. Vorrichtung (1) zum Verteilen einer körnigen Substanz nach Anspruch 3, wobei
auf einer in Drehrichtung betrachteten hinteren Seite eines jeden der Halter (21) in der Verteilplatte (5) ein Vorsprung ausgeformt ist, der in der Dickenrichtung der Verteilplatte (5) vorspringt.

5. Vorrichtung (1) zum Verteilen einer körnigen Substanz nach Anspruch 1, wobei
ein Trichter (3) vorgesehen ist, in dem die körnige Substanz vorübergehend gelagert ist und durch den die körnigen Substanzen dem zuführungsseitigen Rahmenkörper (4) zugeführt werden.

6. Vorrichtung (1) zum Verteilen einer körnigen Substanz nach Anspruch 1, wobei
an der Position des Übergabelochs (24) ein Abstreifer (31) vorgesehen ist, der federnd mit dem Außenumfang der Verteilplatte (5) in Kontakt steht.

7. Vorrichtung (1) zum Verteilen einer körnigen Substanz nach Anspruch 6, wobei
der Abstreifer (31) so geformt ist, dass ein Spitzenbereich eines Plattenmaterials mit einer Breite gebogen ist, wobei ein gebogener Bereich (32) davon mit einem Eckbereich auf dem Außenumfang der Verteilplatte (5) gegenüber der Position der Austrittsplatte (7) in Kontakt kommt, und wobei der gebogene Bereich (32) Elastizität in Richtung der Seite der Austrittsplatte (7) aufweist.

8. Vorrichtung (1) zum Verteilen einer körnigen Substanz nach Anspruch 1, wobei
die Antriebswelle (12) in die Richtung gekippt ist, in der der austrittsseitige Rahmenkörper (8) niedriger positioniert ist als die Verteilplatte (5).

9. Vorrichtung (1) zum Verteilen einer körnigen Substanz nach Anspruch 1, wobei
die Austrittsplatte (7) zwei Arten ausgesparter Bereiche (25a, 25b) unterschiedlicher Größe aufweist, die abwechselnd in gleichen Abständen vorgesehen sind, wobei Positionen der ausgesparten Bereiche (25a, 25b) Positionen der Halter (21) in der Verteilplatte (5) entsprechen.

10. Vorrichtung (1) zum Verteilen einer körnigen Substanz nach Anspruch 9, wobei
die ausgesparten Bereiche (25a, 25b) alle hin zu einem Außenumfang der Austrittsplatte (7) und hin zu einer oberen Oberflächenseite, die auf die Übergabeplatte (6) gerichtet ist, geöffnet sind und wobei die ausgesparten Bereiche (25a, 25b) alle auf einer unteren Oberflächenseite mit einem Boden versehen sind.

## Revendications

1. Dispositif de distribution de substance granulaire (1) comprenant :
un mécanisme de rotation (2) faisant tourner un arbre d'entraînement (12) ;
un corps de bâti latéral d'alimentation (4) ;
une plaque de distribution (5) prévue avec des supports (21), chacun maintenant une substance granulaire ou une quantité prédéterminée de substances granulaires amenées à l'intérieur dudit corps de bâti latéral d'alimentation (4) dans leur partie circonférentielle externe ;
une plaque de décharge (7) prévue avec des parties évidées (25), chacune contenant la substance granulaire ou des substances granulaires dans leur partie circonférentielle externe d'une manière correspondant aux positions des supports (21) ;
une plaque de livraison (6) disposée entre ladite plaque de distribution (5) et ladite plaque de décharge (7) et ayant un trou de livraison (24) à travers lequel les substances granulaires sont livrées de ladite plaque de distribution (5) à ladite plaque de décharge (7) formée dans sa partie supérieure ; et
un corps de bâti latéral de décharge (8) recouvrant la circonférence externe de ladite plaque de décharge (7) et prévue avec un orifice de décharge (26) à travers lequel la substance granulaire ou les substances granulaires contenues dans chacune des parties évidées (25) est ou sont déchargée (s) dans sa partie d'extrémité inférieure, dans lequel :
ledit corps de bâti latéral d'alimentation (4), ladite plaque de livraison (6) et ledit corps de bâti latéral de décharge (8) sont fixes, et
ladite plaque de distribution (5) et ladite plaque de décharge (7) tournent toutes deux dans la même direction et à la même vitesse autour de l'arbre d'entraînement (12), et dans lequel :
le dispositif de distribution de substance granulaire (1) décharge la substance granulaire ou les substances granulaires tout en se déplaçant dans une direction perpendiculaire à l'arbre d'entraînement (12) dans la direction de plan, **caractérisé en ce que** :
le dispositif de distribution de substance granulaire (1) décharge la substance granulaire ou les substances granulaires tout en se déplaçant vers un côté arrière de la direction de rotation au niveau de l'extrémité inférieure de ladite plaque de décharge (7).

2. Dispositif de distribution de substance granulaire (1) selon la revendication 1, dans lequel :
la forme de chacun des supports (21) est une forme triangulaire s'ouvrant sur la circonférence externe.

3. Dispositif de distribution de substance granulaire (1) selon la revendication 1, dans lequel :
dans ladite plaque de distribution (5), l'épaisseur de chacun des supports (21), d'un côté avant de la direction de rotation, est plus fine que celle de chacun des supports (21) du côté arrière de la direction de rotation.

4. Dispositif de distribution de substance granulaire (1) selon la revendication 3, dans lequel :
du côté arrière de la direction de rotation de chacun des supports (21) dans ladite plaque de distribution (5), on forme une saillie faisant saillie dans le sens de l'épaisseur de ladite plaque de distribution (5).

5. Dispositif de distribution de substance granulaire (1) selon la revendication 1, dans lequel :
on prévoit une trémie (3) dans laquelle les substances granulaires sont temporairement stockées et à travers laquelle les substances granulaires sont amenées audit corps de bâti latéral d'alimentation (4).

6. Dispositif de distribution de substance granulaire (1) selon-la revendication 1, dans lequel :
dans la position du trou de livraison (24), on prévoit un grattoir (31) venant, de manière résiliente, en contact avec la circonférence externe de ladite plaque de distribution (5).

7. Dispositif de distribution de substance granulaire (1) selon la revendication 6, dans lequel:
le grattoir (31) est formé de sorte qu'une partie de pointe d'un matériau de plaque ayant une largeur est pliée, a sa partie pliée (32) qui vient en contact avec une partie de coin, sur la circonférence externe de ladite plaque de distribution (5), opposée à la position de ladite plaque de décharge (7), et présente une résilience vers le côté de ladite plaque de décharge (7).

8. Dispositif de distribution de substance granulaire (1) selon la revendication 1, dans lequel :
l'arbre d'entraînement (12) est incliné dans la direction dans laquelle ledit corps de bâti latéral de décharge (8) est plus bas que ladite plaque de distribution (5).

9. Dispositif de distribution de substance granulaire (1) selon la revendication 1, dans lequel :
ladite plaque de décharge (7) a deux types de parties évidées (25a, 25b) dont les tailles différentes sont prévues de manière alternée à des intervalles identiques et les positions des parties évidées (25a, 25b) correspondent aux positions des supports (21) dans ladite plaque de distribution (5).

10. Dispositif de distribution de substance granulaire (1) selon la revendication 9, dans lequel :
les parties évidées (25a, 25b) sont chacune ouvertes vers un côté circonférentiel externe de ladite plaque de décharge (7) et vers un côté de face supérieure faisant face à ladite plaque de livraison (6) et ont chacune un fond sur un côté de face inférieure.
